# EUROPEAN PATENT APPLICATION

(11) **EP 2 317 228 A2**
(43) Date of publication of application: **04.05.2011**
(21) Application number: 10170050.8
(22) Date of filing: 19.07.2010
(51) Int. Cl.: F23R 5/00

(54) **Method and device for feeding powdered fuel into the combustor of an open cycle gas turbine**

(30) Priority: 30.10.2009 TW 098136798; 09.04.2010 EP 10159544
(71) Applicant: Kuo, Mr, Tsung-Hsien, Chia-Yi City (TW)
(72) Inventor: Kuo, Mr, Tsung-Hsien, Chia-Yi City (TW)
(74) Representative: Whitlock, Holly Elizabeth Ann

(57) **Abstract**

The present invention provides a device for feeding powdered fuel into the combustor of an open cycle gas turbine for combustion and then working in the gas turbine so as to generate power, and more particularly to an innovative method and device with use of closed helical feeder that can prevent leakage of high-pressure combusting gas along the rotating shaft of helical fin within the containment vessel.

## Description

This invention relates to a method and device for feeding powdered fuel into the combustor of an open cycle gas turbine for rapid, safe and efficient combustion so as to generate power, and more particularly to an innovative method and device with use of closed helical feeder.

Conventionally, the solid coal powder is input into the combustor of an open cycle gas turbine to generate power by the following methods: the coal is firstly crushed and screened, then the coal powder mixed into air is pumped by the impeller of the distributor (or called divider) and guided into the central air vent of the impeller through a conduit; next the powder is compressed by a compressor and fed into many supply pipes of a regulator around the distributor; the other end of every supply pipe is connected with a small jet exhaust, and a big jet exhaust is sleeved externally and also uniformly assembled on the periphery of the combustor; so coal powder mixed into air can be uniformly injected into the combustor through the small jet exhaust, meanwhile the big jet exhaust ejects high-pressure air such that the coal powder has a bigger contact surface with air for more rapid combustion. In the open cycle gas turbine, a bigger pressure ratio of the compressor means a bigger pressure of the combustor and higher efficiency of the system. Generally, the minimum pressure ratio of compressor is 4. For instance, the efficiency of compressor is 85%, air Cp/Cv ratio is 1.4, air temperature when entering into the compressor is set as 25 °C, and air temperature when being discharged from the compressor will reach 195.35 °C . Given that the compressor's pressure ratio in the open cycle gas turbine is bigger than 4, a much bigger pressure ratio of impeller in the distributor shall be required to feed the mixed coal powder and air into the combustor. Hence, air temperature is also higher than 195.35°C. Among complex coal composition, Coal tar Creosote contains 300 kinds of compounds, such as: Phenol (M.P. 43°C, Flash Point 79°C, B.P. 182°C), Cresol(M.P. 31 °C, Flash Point 81°C, B.P. 191°C) and Polycyclic aromatic hydrocarbons(Flash Point >55°C, B.P. 180°C-390°C). Similarly, among complex wood composition, Wood Creosote also contains Guaiacol (M.P. 27.9°C, B.P. 205°C) and Cresol(M.P. 31°C, Flash Point 81°C, B.P. 191°C). Thus, once coal or plant powder comes into contact with air of over 195.35°C compressed by aforementioned impeller, the substances in Coal tar Creosote or Wood Creosote will be burnt partially, some unburnt substances will generate soot, and some substances are melted and adhered onto the inner wall or nozzle of the distribution pipes, leading possibly to congestion. In such case, it is required to remove regularly the oil stain and soot in the distribution pipes if users intend to feed the plant or coal powder into the combustor of an open cycle gas turbine for driving the vehicles and ships or for power generation purpose.

The present invention relates to a method and device, which can, with the help of a closed helical feeder that prevents leakage of high-pressure combusting gas along the rotating shaft of helical fin within the containment vessel, feed the powdered fuel into the combustor of an open cycle gas turbine for rapid, safe, stable and efficient combustion so as to generate power. There are three types of closed helical feeders: 1: a driver comprised of motor and gear reducer is used for driving the external magnet, and then the internal magnet and helical fin in the glandless insulation shell are driven magnetically to form a closed helical feeder; 2: a driver comprised of motor and gear reducer is closely connected with the rotating shaft of the helical fin to form a closed helical feeder; 3: a stuffing box is mounted at the joint of the rotating shaft of the closed helical feeder and the driver (comprised of motor and gear reducer); the stuffing box is charged with gland packing or gland sealing, and then locked securely by a gland cock to form a closed helical feeder. The aforementioned three closed helical feeders are capable of preventing leakage of combusting gas from the combustor along the rotating shaft of the helical feeder; moreover, the storage tank of the powder is fully sealed, so high-pressure combusting gas in the combustor cannot flee towards the feed pipe and helical feeder, thus avoiding contact with the fuel to burn down the feeder. Hence, either of the aforementioned helical feeders can be used to feed safely and continuously the fuel powder into the combustor, which comes into contact with high-pressure air and generates high-pressure combusting gas; next, the gas enters into the gas turbine to work expansively and generate power to drive the compressors, vehicles, ships or power generation systems and devices. In order to state up the aforementioned system more easily, safely and efficiently, the following procedures and equipments are provided to resolve the shortcomings therein: 1: an auto-adding device for auxiliary fuel. Since the spontaneous ignition temperature of solid fuel (beech powder about 540°C) is much higher than that of gasoline, air temperature after preheating and compression with startup of the system will take a period of time to slowly exceed the spontaneous ignition temperature of solid fuel; in that case, the system power can be under full-load operation, and the combustor is equipped with an auxiliary fuel inlet pipe, which is connected with auto-adding device for high-pressure auxiliary fuel; so, when the system is started up or the power becomes smaller (i.e. air temperature entering into the combustor is still less than spontaneous ignition temperature of solid fuel), auxiliary fuel can be added quickly to ensure flexible and rapid startup and operation the same as the conventional vehicles; 2: small air compressor with accumulator. In order to prevent high-temperature, high-pressure combusting gas from fleeing towards helical feeder and fuel storage tank, a small air compressor with accumulator is provided; the accumulator, the fuel storage tank's top and the containment vessel of helical feeder are connected by a small conduit, so that high-pressure air staying within the accumulator can be guided into the fuel storage tank and the containment vessel of helical feeder through the small conduit, and the pressure is permanently maintained a little higher than that of the combustor, ensuring that the combusting gas will not flee towards the helical feeder and fuel storage tank against the system safety. Moreover, the accumulator and high-temperature, high-pressure air storage tank are linked by conduit; once startup of the system, high-pressure air within the accumulator can be transferred directly into the combustor via the high-temperature, high-pressure air storage tank, making the startup power reach full-load quickly; 3: air preheating device. Once the system starts operation, the compressor mixes the preheated air with a little amount of exhaust gas, whose temperature is prone to exceed the spontaneous ignition temperature of fuel powder in the combustor; 4: L-shaped elbow refractory inner furnace and porous fire-retardant mantle. L-shaped elbow refractory inner furnace locates at the lower blazing zone within the combustor, which is used to prevent the blazing flame of fuel from burning down the wall of the combustor under the support of high-temperature air; and, the porous fire-retardant mantle set between inner wall of the combustor and the refractory inner furnace, which is used to prevent the ejected hot water or steam from quenching the flame and the blazing flame from burning down the wall of combustor; 5: auto-cooling device. In the event of extremely high temperature of the combustor, the control system automatically turns the valve connected with the nozzle to a wider open position, and then the pressure is utilized to sprays numerous water or steam into the combustor via nozzle to reduce the temperature and guarantee the safety; otherwise, in the event of extremely low temperature of the combustor, the valve is automatically turned down, and the sprayed water or stream decreases to heat up the combustor for a stable output power of the system.

This invention provides a device for feeding powdered fuel into the combustor of an open cycle gas turbine for combustion and working with use of closed helical feeder, which comprising: a storage tank (1), a closed helical feeder (7), a combustor (30), a gas turbine (36), a compressor (37), a power propelled coupler (38), and a generator (39), which is characterized in that:
the bottom of the storage tank (1) is connected with a closed helical feeder (7); the closed helical feeder (7) is fitted with a feed pipe that is connected with the inlet pipe of the combustor (30); when started, the powdered fuel is inputted into the combustor (30); said combustor (30) comprises an ignition tool (31), which is set over the inlet pipe of the fuel and air, so that the fuel can be flamed; the gas turbine (36) and combustor (30) are connected through a conduit, so the combusting gas caused by the combustor (30) enters into the gas turbine (36) for expansive working to drive the rotating shaft of the gas turbine (36); the rotating shaft of the compressor (37), the rotating shaft of power propelled coupler (38) and the rotating shaft of generator (39) are connected with the rotating shaft of the gas turbine (36); the air is compressed in the compressor (37), and enters the combustor (30) via the sixth conduit (46), T-shaped pipe (19), and the ninth conduit (18a) for combustion; the ninth conduit (18a) is set with an air flow transmitter (58), which is conducted to a ratio setter (59); the ratio setter (59) is connected with a fuel controller (60); the fuel controller (60) is connected with the driver.

In order that the present invention may be well understood, the above-mentioned preferred embodiment thereof, which is given by way of example only, will be described with reference to the accompanying drawings, in which:
FIG. 1 shows a schematic view of the present invention relating to a method and device for feeding powdered fuel into the combustor of an open cycle gas turbine for combustion and working with use of closed helical feeder;
FIG. 2 shows a schematic view of the present invention that the powdered fuel is fed into the combustor with the first closed helical feeder;
FIG. 3 shows a schematic view of the present invention that the powdered fuel is fed into the combustor with the second closed helical feeder;
FIG. 4 shows a schematic view of the present invention that the powdered fuel is fed into the combustor with the third closed helical feeder; and
FIG. 5 shows a schematic view of the combustor of the present invention.

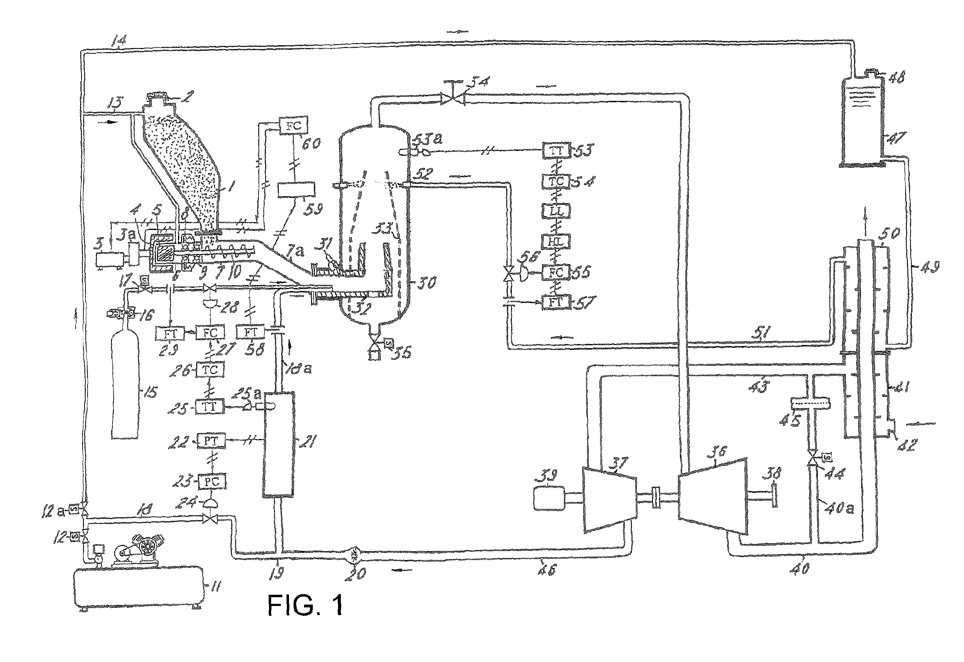

Referring to FIG. 1--a schematic view of the present invention relating to a method and device for feeding powdered fuel into the combustor of an open cycle gas turbine for combustion and working with use of closed helical feeder, which comprising: a storage tank 1 with its bottom connected with a closed helical feeder 7, a closed helical feeder 7, a combustor 30, a gas turbine 36 and a compressor 37, of which:
the storage tank 1 made of pressure tank can accommodate the powdered fuel and make it fall into the closed helical feeder 7 from the bottom; a cover 2 set on the top can be opened to load the fuel powder; the cover 2 can also be closed to avoid leakage of high-pressure combusting gas; the tank bottom is of an oblique or cone-shaped bottom; the tank top is connected with a conduit 13, such that high-pressure cold air from the conduit 13 can be guided into the fuel storage tank 1.

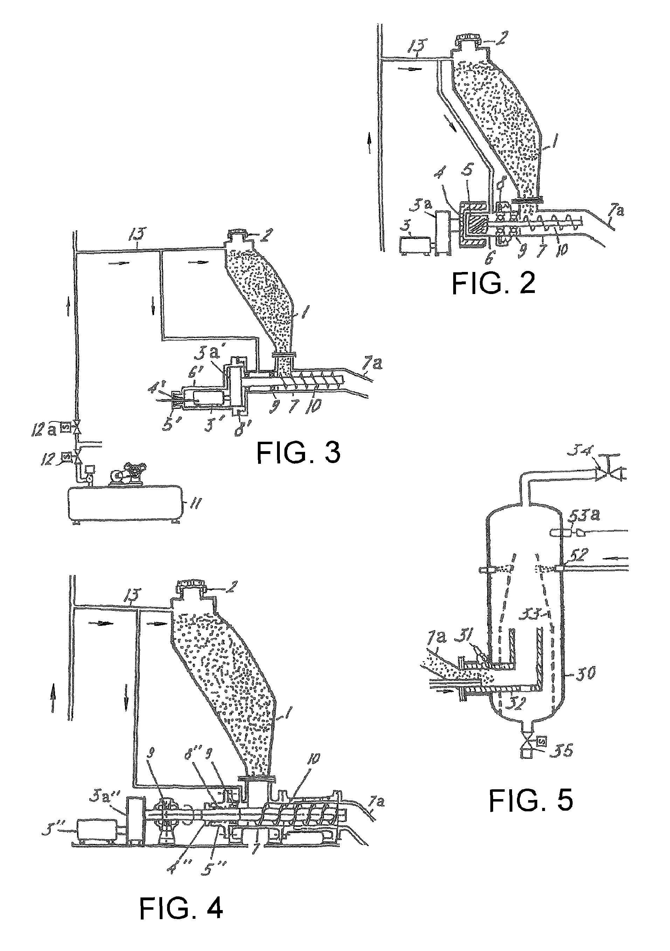

The upper end of the closed helical feeder 7 is connected with the storage tank 1, and the lower end is fitted with a feed pipe 7a that is connected with the inlet pipe of the combustor 30; there are available with following three preferred embodiments: referring to FIG. 2, the closed helical feeder 7 comprises a motor 3, gear reducer 3a, external magnet 4, internal magnet 5, glandless insulation shell 6, housing of the closed helical feeder 7, feed pipe 7a, annular gasket 8, bearing 9 and helical fin 10. A driver comprised of motor 3 and gear reducer 3a is used for driving the external magnet 4, and then the internal magnet 5 and integrated helical fin 10 in the glandless insulation shell 6 are driven magnetically to form a closed helical feeder 7. When the driver is activated, the fuel powder falling from the fuel storage tank 1 into the helical fin 10 is rapidly pushed into the feed pipe 7a and the combustor 30. Referring to FIG. 3, the closed helical feeder 7 comprises a motor 3', a gear reducer 3a', a rubber plug 4' with a central hole for threading of electrical wire, a screw lid 5' used for fixing the rubber plug 4' and sealing the hole of the rubber plug 4' and also provided with a central hole for threading of electrical wire, driver containment vessel 6', housing of the closed helical feeder 7, feed pipe 7a, annular gasket 8', bearing 9 and helical fin 10. The driver is closely connected with the rotating shaft of the helical fin 10 and mounted into the containment vessel 6', the helical fin 10 is mounted into the housing of the closed helical feeder 7, and the annular gasket 8' is set between the containment vessel 6' and the housing of the closed helical feeder 7, and also screwed tightly by screw and nut; additionally, the electrical wire of the motor 3' penetrates tightly the small holes of the rubber plug 4' and screw lid 5', both the electrical wire and the rubber plug to get united with adhesives, and to stop the combusting gas will flee from the small holes, so as to form a closed helical feeder 7. When the driver comprised of motor 3' and gear reducer 3a' is started, the fuel powder falling from the fuel storage tank 1 into the helical fin 10 is rapidly pushed into the feed pipe 7a and the combustor 30. Referring to FIG. 4, the closed helical feeder 7 comprises a motor 3", gear reducer 3a", gland cock 4", stuffing box 5", housing of the closed helical feeder 7, feed pipe 7a, gland packing 8", bearing 9 and helical fin 10. A stuffing box 5" is mounted at the joint of the rotating shaft of the closed helical feeder 7 and the driver (comprised of motor 3" and gear reducer 3a"); the stuffing box 5" is charged with gland packing 8" or gland sealing, and then locked securely by a gland cock 4" to form the closed helical feeder 7.

Referring to FIG. 5, the combustor 30 comprises an ignition tool 31, a refractory inner furnace 32 with a bottom hole for discharge of ashes, a porous fire-retardant mantle 33, a manual(or foot) control valve 34, a discharge valve 35, a nozzle 52 and a temperature sensor 53a. The ignition tool 31 is set over the fuel, auxiliary fuel and air inlet pipe of the combustor 30, enabling to ignite the fuel and auxiliary fuel within the combustor 30. The L-shaped elbow refractory inner furnace 32 is mounted onto the lower blazing zone within the combustor 30, helping to prevent the blazing flame from burning down the wall of the combustor under the support of high-temperature air. The porous fire-retardant mantle 33 is mounted between the inner wall of the combustor 30 and the refractory inner furnace 32. While avoiding the ejected hot water or steam to quench the flame from the nozzle 52, the porous fire-retardant mantle 33 can prevent the blazing flame from burning down the wall of combustor 30. The manual (or foot) control valve 34 is assembled onto the conduit between the combustor 30 and the gas turbine 36, allowing to control the flow of combusting gas into the gas turbine 36 for adjusting the required output power. The discharge valve 35 can discharge the ashes discharged from the holes of the refractory inner furnace 32 and piled at the bottom of the combustor 30. The nozzle 52 is fixed onto the wall of the combustor 30 overhead the porous fire-retardant mantle 33, and connected with one end of a seventh conduit 51; the other end of the seventh conduit 51 is connected with the outlet of a water heater 50; the inlet of the water heater 50 is connected with a water-feeding barrel 47 via the eighth conduit 49; a screw cover 48 is set at the top of the water-feeding barrel 47, and can be opened to feed water. The water heater 50 is mounted nearby the exhaust pipe 40 of the gas turbine 36, enabling heat exchange of the water in the water heater 50 from water-feeding barrel 47 with the exhaust gas in the exhaust pipe 40; then the preheated water or steam flows to the nozzle 52 via the seventh conduit 51; the seventh conduit 51 is equipped with a control system that comprises of a valve 56, a flow controller 55, a temperature controller 54, a flow transmitter 57 and a temperature transmitter 53; the valve 56 is connected with the flow controller 55; one end of the flow controller 55 is connected with the flow transmitter 57; the other end of the flow controller 55 is connected with the temperature controller 54; the other end of the temperature controller 54 is connected with the temperature transmitter 53; the temperature transmitter 53 is connected with the temperature sensor 53a; the temperature sensor 53a is mounted onto the wall of the combustor 30, capable of detecting the temperature of the combustor 30, and converting the detection results into signals and transmitting to the temperature transmitter 53. The flow transmitter 57 is capable of detecting the water or steam flow of the seventh conduit 51, and converting the detection results into signals and transmitting to the flow controller 55. The flow transmitter 57 and the flow controller 55 constitute a secondary loop control to supplement the changing water or steam flow; when the temperature of combustor 30 is extremely high, the control system automatically turns the valve 56 connected with the nozzle 52 to a wider open position, and then numerous water or steam is sprayed via nozzle 52 into the combustor 30 to reduce the temperature and guarantee the safety; otherwise, when the temperature of the combustor 30 is too low, the valve 56 is automatically turned down, and the sprayed water or stream decreases to heat up the combustor 30 for a stable output power of the system.

The gas turbine 36 and combustor 30 are connected through a conduit, so the combusting gas caused by the combustor 30 enters into the gas turbine 36 for expansive working to drive the rotating shaft of the gas turbine 36; all rotating shafts of gas turbine 36, air compressor 37, power propelled coupler 38 and generator 39 are connected, such that the air compressor 37 can compress air with the rotation of the rotating shaft of the gas turbine 36, the generator 39 can generate power with the rotation of the rotating shaft of the gas turbine 36, and the power propelled coupler 38 can drive vehicles and ships with the rotation of the rotating shaft of the gas turbine 36.

The rotating shaft of the compressor 37 is connected with the rotating shaft of the gas turbine 36, and the compressor 37 is connected with a one-way valve 20 via the sixth conduit 46, only allowing air to flow towards the combustor 30 through one-way valve 20.

To ensure easier startup of aforementioned system, an auto-adding device for auxiliary fuel is additionally provided for the present invention. The auto-adding device for auxiliary fuel comprises a steel drum 15 fitted with a pressure regulator 16, a valve 17 connected with auxiliary fuel inlet pipe of combustor 30 by a conduit and a control valve 28. The steel drum 15 made of a pressure tank can accommodate inflammable fuel such as natural gas; the pressure regulator 16 can reduce the pressure of inflammable fuel flowing out of the steel drum 15; the valve 17 can be turned on or off to control the flow of the inflammable fuel; the flow controller 27 is separately connected with a control valve 28 and a flow transmitter 29; the flow controller 27 is connected with a temperature controller 26; the temperature controller 26 is connected with a temperature transmitter 25; the temperature transmitter 25 is connected with a temperature sensor 25a; the temperature sensor 25a is mounted on the high-temperature, high-pressure air storage tank 21, capable of detecting the temperature of the air storage tank 21, and converting the detection results into signals and transmitting to the temperature transmitter 25. The flow transmitter 29 is capable of detecting the inflammable fuel flow of the conduit, and converting the detection results into signals and transmitting to the flow controller 27. The flow transmitter 29 and the flow controller 27 constitute a secondary loop control to supplement the changing flow of inflammable fuel; when the system is started up or the power becomes smaller, the temperature of high-temperature, high-pressure air storage tank 21 is lower than the set temperature (set temperature slightly higher than the spontaneous ignition temperature of the powdered fuel), then the temperature signal of the temperature sensor 25a is transmitted to the temperature transmitter 25, temperature controller 26 and flow controller 27 so as to turn on the control valve 28; next the inflammable fuel flowing out of the steel drum 15 can enter into the combustor 30 for combustion, thus providing power to ensure flexible and rapid startup/operation the same as conventional vehicles.

To ensure safer operation of the aforementioned system and rapid full-loading of power, a small air compressor 11 fitted with an accumulator is provided to feed high-pressure cold air, wherein the pressure of high-pressure air is higher than that within the combustor 30. The small air compressor 11 with an accumulator is provided with a valve 12, which is separately connected with valve 12a and the third conduit 18 via a tee pipe; the third conduit 18 is fitted with a control valve 24, a pressure controller 23 connected with the other end of the control valve 24, a pressure transmitter 22 connected with the other end of the pressure controller 23, a tee pipe 19 with its first end connected with the third conduit 18, a one-way valve 20 connected with the second end of the tee pipe 19, and a high-temperature, high-pressure air storage tank 21 connected with the third end of the tee pipe 19. The pressure transmitter 22 is mounted onto the high-temperature, high-pressure air storage tank 21, capable of detecting the pressure of the high-temperature, high-pressure air storage tank 21, and converting the detection results into signals and transmitting to the pressure controller 23. The one-way valve 20 is connected with the sixth conduit 46, capable of blocking off high-pressure air (with temperature close to air temperature) to enter into the sixth conduit 46, and allowing high-pressure air to enter into the high-temperature, high-pressure air storage tank 21. An air flow transmitter 58 is set onto the ninth conduit 18a between the high-temperature, high-pressure air storage tank 21 and the combustor 30; the air flow transmitter 58 is connected with a ratio setter 59, which is then connected with a fuel controller 60; the air flow transmitter 58 is capable of detecting air flow of the ninth conduit 18a, and converting the detection results into signals and transmitting to the ratio setter 59 and fuel controller 60. The fuel controller 60 is connected with the driver, capable of regulating the rotational speed of the driver; it is used to regulate the speed of feeding the fuel powder into the combustor 30 through the closed helical feeder 7. The valve 12a can be turned on or off to control if high-pressure air (with temperature close to air temperature) slightly flows to the fourth conduit 13 and the fifth conduit 14 connected with the valve 12a; the fourth conduit 13 is separately connected with the closed helical feeder 7 and storage tank 1; the fifth conduit 14 is connected with the water-feeding barrel 47; so high-pressure air (with temperature close to air temperature) flows into the closed helical feeder 7 and storage tank 1 through valve 12a and the fourth conduit 13, such that the pressure within the storage tank 1 and helical feeder 7 is permanently maintained a little higher than that of the combustor 30, thus ensuring that the combusting gas will not flee towards the helical feeder 7 and fuel storage tank 1 against the system safety. Furthermore, high-pressure air (with temperature close to air temperature) flows to high-temperature, high-pressure air storage tank 21 through valve 12, the third conduit 18 and tee pipe 19, and enters rapidly into the ignited combustor 30, so that the system's power output can be put into full-load state.

The system of the present invention is equipped with an air preheating device for higher efficiency, which comprises an air preheater 41 with a cold air inlet 42, a first conduit 43, a valve 44 and a waste gas filter 45. The air preheater 41 is mounted around the exhaust pipe 40 of the gas turbine 36, and connected with the compressor 37 via the first conduit 43; air from cold air inlet 42 is preheated by air preheater 41 and then flows into the compressor 37 through the first conduit 43; additionally, the exhaust pipe 40 and the first conduit 43 are connected by the second conduit 40a fitted with a valve 44 and a waste gas filter 45. Once startup of the system, the compressor 37 pumps the heated air and a little amount of exhaust gas flowing through the waste gas filter 45 in tune with the rotation of the rotating shaft of gas turbine 36, such that the preheated air is mixed with a little amount of exhaust gas, and the compressed air (with temperature exceeding spontaneous ignition temperature of fuel powder in the combustor 30) flows into the tee pipe 19 through one-way valve 20 on the sixth conduit 46, and then into the combustor 30 through high-temperature, high-pressure air storage tank 21 and the ninth conduit 18a. Thus, the compressed air enters into the combustor 30 and comes into contact with the fuel powder for supporting the combustion.

Referring to FIG. 1, to start the system, the valve 12 is opened, high-pressure air stored in small air compressor's accumulator 11 flows through control valve 24 via the third conduit 18, and then through tee pipe 19; then, air is blocked by one-way valve 20, enters into high-temperature, high-pressure air storage tank 21, the ninth conduit 18a, and passes through air flow transmitter 58 to the combustor 30; the air flow transmitter 58 transmits signal to the ratio setter 59 and fuel controller 60, so as to control the rotational speed of the driver (comprised of motor 3 and gear reducer 3a) and the helical fin 10, and further control the speed of feeding the fuel powder from the storage tank 1 to the internal furnace 32 of the combustor 30 via feed pipe 7a; meanwhile, the valve 17 is opened, allowing the high-pressure inflammable auxiliary fuel to flow from the steel drum 15 to the internal furnace 32 of the combustor 30 via pressure regulator 16 and conduit; then, ignition tool 31 is used to ignite the auxiliary fuel and powdered fuel in the combustor 30; then, valve 12a is slightly opened, allowing high-pressure air in small air compressor's accumulator 11 to be fed into the storage tank 1 and closed helical feeder 7 via the fourth conduit 13, and into the water-feeding barrel 47 via the fifth conduit 14; the combusting gas generated in the combustor 30 flows through manual (or foot) control valve 34 into the gas turbine 36 for expansive working, thus driving the rotating shaft of air compressor 37, power propelled coupler 38 and generator 39; most of waste gas discharged from exhaust pipe 40 is released into air through air preheater 41 and water heater 50; a little amount of waste gas flows from the exhaust pipe 40 to the first conduit 43 through second conduit 40a, valve 44 and waste gas filter 45, so as to mix with preheated air for increasing rapidly the air temperature; the high-temperature mixed air is pumped by the compressor 37, with the temperature exceeding spontaneous ignition temperature of fuel powder in the combustor 30; then air flows from the sixth conduit 46 into the tee pipe 19 through one-way valve 20; since the pressure is lower than air pressure in the third conduit 18, high-temperature air turns into high-temperature, high-pressure air storage tank 21; once the pressure of high-temperature, high-pressure air storage tank 21 increases to the lower limit of setting pressure, the pressure transmitter 22 transmits signal to the pressure controller 23, and closes the control valve 24 to shut off the input of high-pressure air from the third conduit 18; meanwhile, air temperature in the high-temperature, high-pressure air storage tank 21 increases gradually due to input of preheated and compressor air; when the temperature rises to the lower limit of setting temperature(about 50°C higher than the spontaneous ignition temperature of powdered fuel), the temperature sensor 25a sends signal to the temperature transmitter 25, and then to the temperature controller 26 and flow controller 27, next shuts off automatically the control valve 28 to prevent entry of high-pressure inflammable auxiliary fuel into the combustor 30 for saving auxiliary fuel; since the temperature of high-temperature/-pressure air flowing from the high-temperature, high-pressure air storage tank 21 has exceeded the spontaneous ignition temperature of the fuel powder, sufficient supportive combustion can be rapidly realized when the high-temperature/ -pressure air flows through the ninth conduit 18a into the combustor 30 and comes into contact with the fuel powder; when the temperature of combusting gas exceeds the upper limit of the setting temperature of the combustor 30, the temperature sensor 53a transmits the signal to the temperature transmitter 53, and then to the temperature controller 54 and flow controller 55; next, valve 56 is opened, allowing water supply pushed by high-pressure air to flow from water-feeding barrel 47, the eighth conduit 49 and pass through water heater 50, the seventh conduit 51 and valve 56 and nozzle 52; and finally is sprayed onto the porous fire-retardant mantle 33 to reduce the temperature of combusting gas and prevent burning down of the combustor 30; to increase the speed of vehicles and ships, the manual (or foot) control valve 34 is turned to a wider open position; otherwise, turned down or braked.

## Claims

1. A device for feeding powdered fuel into the combustor of an open cycle gas turbine for combustion and working with use of closed helical feeder, which comprising: a storage tank (1), a closed helical feeder (7), a combustor (30), a gas turbine (36), a compressor (37), a power propelled coupler (38), and a generator (39), which is **characterized in that**:
the bottom of the storage tank (1) is connected with a closed helical feeder (7); the closed helical feeder (7) is fitted with a feed pipe that is connected with the inlet pipe of the combustor (30); when started, the powdered fuel is inputted into the combustor (30); said combustor (30) comprises an ignition tool (31), which is set over the inlet pipe of the fuel and air, so that the fuel can be flamed; the gas turbine (36) and combustor (30) are connected through a conduit, so the combusting gas caused by the combustor (30) enters into the gas turbine (36) for expansive working to drive the rotating shaft of the gas turbine (36); the rotating shaft of the compressor (37), the rotating shaft of power propelled coupler (38) and the rotating shaft of generator (39) are connected with the rotating shaft of the gas turbine (36); the air is compressed in the compressor (37), and enters the combustor (30) via the sixth conduit (46), T-shaped pipe (19), and the ninth conduit (18a) for combustion; the ninth conduit (18a) is set with an air flow transmitter (58), which is conducted to a ratio setter (59); the ratio setter (59) is connected with a fuel controller (60); the fuel controller (60) is connected with the driver.

2. The device as claimed in Claim 1, wherein the closed helical feeder (7) comprises a motor (3), gear reducer (3a), external magnet (4), internal magnet (5), glandless insulation shell (6), housing of the closed helical feeder (7), feed pipe (7a), annular gasket (8), bearing (9) and helical fin (10); a driver comprised of motor (3) and gear reducer (3a) is used for driving the external magnet (4), and then the internal magnet (5) and helical fin (10) in the glandless insulation shell (6) are driven magnetically.

3. The device as claimed in Claim 1, wherein the closed helical feeder (7) comprises a motor (3'), a gear reducer (3a'), a rubber plug (4') with a central hole for threading of electrical wire, a screw lid (5') used for fixing the rubber plug (4') and sealing the hole of the rubber plug (4') and also provided with a central hole for threading of electrical wire, a driver containment vessel (6'), housing of the closed helical feeder (7), feed pipe (7a), annular gasket (8'), bearing (9) and helical fin (10); the driver is closely connected with the rotating shaft of the helical fin (10) and mounted into the containment vessel (6'), the helical fin (10) is mounted into the housing of the closed helical feeder (7), and the annular gasket (8') is set between the containment vessel (6') and the housing of the closed helical feeder (7), and also screwed tightly by screw and nut; the electrical wire of the motor (3') penetrates tightly the small holes of the rubber plug (4') and screw lid (5'), and stick said electrical wire in said plug together, and to stop the combusting gas will flee from the small holes so as to form a closed helical feeder.

4. The device as claimed in Claim 1, wherein the closed helical feeder (7) comprises a motor (3"), gear reducer (3a"), gland cock (4"), stuffing box (5"), housing of the closed helical feeder (7), feed pipe (7a), gland packing (8"), bearing (9) and helical fin (10); a stuffing box (5") is mounted at the joint of the rotating shaft of the closed helical feeder (7) and the driver (comprised of motor (3") and gear reducer (3a")); the stuffing box (5") is charged with gland packing (8"), and then locked securely by a gland cock (4") to form the closed helical feeder.

5. The device as claimed in any of Claims 2 to 4, wherein further comprising an auto-adding device for auxiliary fuel, and a high-temperature high-pressure air storage tank (21) between the T-shaped pipe (19) and the ninth conduit (18a); the auto-adding device for auxiliary fuel comprises a steel drum (15) fitted with a pressure regulator (16), a valve (17) connected with auxiliary fuel inlet pipe of combustor (30) by a conduit and a control valve (28); the control valve (28) is connected with a flow controller (27); the flow controller (27) is connected with a temperature controller (26); the temperature controller (26) is connected with a temperature transmitter (25); the temperature transmitter (25) is connected with a temperature sensor (25a); the temperature sensor (25a) is mounted onto the high-temperature, high-pressure air storage tank (21).

6. The device as claimed in any of Claims 2 to 4, wherein a small air compressor (11) fitted with an accumulator is provided; the small air compressor (11) is provided with a valve (12), which is separately connected with valve (12a) and the third conduit (18) via a tee pipe; the third conduit (18) is fitted with a control valve (24), a pressure controller (23) connected with the other end of the control valve (24), a pressure transmitter (22) connected with the other end of the pressure controller (23) and fixed onto the high-temperature/-pressure air storage tank (21), a tee pipe (19) with its first end connected with the third conduit (18), a one-way valve (20) connected with the second end of the tee pipe (19), and a high-temperature, high-pressure air storage tank (21) connected with the third end of the tee pipe (19); valve (12a) is connected with the fourth conduit (13) and the fifth conduit (14); the fourth conduit (13)is separately connected with the closed helical feeder (7) and storage tank (1); the fifth conduit (14) is connected with water-feeding barrel (47).

7. The device as claimed in any of Claims 2 to 4, wherein an air preheating device is provided; the air preheating device comprises an air preheater with a cold air inlet (42), a first conduit (43), a valve (44) and a waste gas filter (45); the air preheater is mounted around the exhaust pipe (40) of the gas turbine (36), and connected with the compressor (37) via the first conduit (43); the exhaust pipe (40) and the first conduit (43) are connected by the second conduit (40a) fitted with a valve (44) and a waste gas filter (45).

8. The device as claimed in any of Claims 2 to 4, wherein the bottom of the combustor (30) is provided with a refractory inner furnace (32) with a small hole; a porous fire-retardant mantle (33) is set between inner wall of the combustor (30) and the refractory inner furnace (32).

9. The device as claimed in any of Claims 2 to 4, wherein a nozzle (52) is fixed onto the wall of the combustor (30), and connected with one end of a seventh conduit (51); the other end of the seventh conduit (51) is connected with the outlet of a water heater (50); the inlet of the water heater (50) is connected with a water-feeding barrel (47) via the eighth conduit (49); the water heater (50) is mounted nearby the exhaust pipe (40) of the gas turbine (36); the seventh conduit (51) is fitted with a valve (56); the valve (56) is connected with a flow controller (55); one end of the flow controller (55) is connected with the flow transmitter (57); the other end of the flow controller (55) is connected with the temperature controller (54); the other end of the temperature controller (54) is connected with the temperature transmitter (53); the temperature transmitter (53) is connected with the temperature sensor (53a); and the temperature sensor (53a) is mounted onto the wall of the combustor (30).

10. A method for feeding powdered fuel into the combustor of an open cycle gas turbine for combustion and working, which comprises:
feeding the powdered fuel into combustor (30) for combustion with a closed helical feeder (7), to produce the high-pressure, high-temperature of combusting gas; then guiding said high-pressure, high-temperature of combusting gas into the gas turbine (36) for expansive working to drive the shaft of said gas turbine (36), all rotating shafts of gas turbine (36), air compressor (37), power propelled coupler (38), and generator (39) are connected, such that the air is being compressed and pumped by said compressor (37); then guiding said high-pressure air into said combustor (30) to assist the combustion of the fuel.

11. The method as claimed in Claim 10, which comprises:
at the start, guiding the high-pressure inflammable auxiliary fuel to flow from the steel drum (15) to the combustor (30) for burning and producing the high-pressure, high-temperature combusting gas; and guiding said high-pressure, high-temperature of combusting gas into said gas turbine (36) for expansive working to drive the shaft of said gas turbine (36), all rotating shafts of gas turbine (36), air compressor (37), power propelled coupler (38), and generator (39) are connected, such that the air is being compressed and pumped by the compressor (37); then guiding the high-pressure air from compressor (37) into the combustor (30) to assist the combustion of the fuel.

12. The method as claimed in Claim 10 or 11, which comprises:
at the start, guiding the high-pressure air from the small air compressor's accumulator (11) into the combustor (30), the powdered fuel burning and producing the high-pressure, high-temperature combusting gas in said combustor (30); and guiding said high-pressure, high-temperature combusting gas into said gas turbine (36) for expansive working to drive the shaft of said gas turbine (36), all rotating shafts of gas turbine (36), air compressor (37), power propelled coupler (38), and generator (39) are connected, such that the air is being compressed and pumped by the compressor (37); then guiding the high-pressure air from said compressor (37) into said combustor (30) to assist the combustion of the fuel.

13. The method as claimed in any of Claims 10 to 12, which comprises:
at first the ambient air has being preheated and mixed with a little amount of exhaust gas of the gas turbine (36), then guiding said air into the compressor (37) and being compressed, so that said compressed air being discharged from compressor (37) and guiding into the combustor (30) has a temperature higher than the spontaneous ignition temperature of the fuel powder, so as the fuel powder burning vigorously in said combustor (30) and producing the high-pressure, high-temperature combusting gas; and guiding said high-pressure, high-temperature combusting gas into said gas turbine (36) for expansive working to drive the shaft of said gas turbine (36), all rotating shafts of gas turbine (36), air compressor (37), power propelled coupler (38), and generator (39) are connected, such that the preheated air is being compressed and pumped by the compressor (37); then guiding the high-pressure, high-temperature air from said compressor (37) into said combustor (30) to assist the combustion of the fuel.
